# EUROPEAN PATENT SPECIFICATION

(11) **EP 2 825 055 B1**
(45) Date of publication and mention of the grant of the patent: **16.11.2016**
(21) Application number: 13705153.8
(22) Date of filing: 15.02.2013
(51) Int. Cl.: A23L 27/60, A23L 3/16, A23D 7/01, A23D 7/005

(54) **HEAT-STABLE OIL-IN-WATER EMULSION**
WÄRMESTABILE ÖL-IN-WASSER-EMULSION
EMULSION D'HUILE DANS L'EAU STABLE À LA CHALEUR

(30) Priority: 15.03.2012 EP 12159619
(43) Date of publication of application: 21.01.2015
(73) Proprietor: Unilever N.V., 3013 AL Rotterdam (NL); Unilever PLC, London, Greater London EC4Y 0DY (GB)
(72) Inventor: GASTEL, Hubertus Cornelis van, 3133 AT Vlaardingen (NL); REGISMOND, Sudarshi Tanuja Angelique, 3133 AT Vlaardingen (NL); RESZKA, Aleksander Arie, 3133 AT Vlaardingen (NL)
(74) Representative: van Benthum, Wilhelmus A. J.
(86) International application number: PCT/EP2013/053058
(87) International publication number: WO 2013/135456

(56) References cited:
- EP-A1- 2 196 096
- EP-A2- 0 295 865
- WO-A1-2005/039316
- US-A- 4 774 099
- CHATSISVILI, N.T., ET AL: "Physicochemical properties of a dressing type oil in water emulsion as influenced by orange pulp fiber incorporation", LEBENSMITTEL WISSENSCHAFT UND TECHNOLOGIE., vol. 46, no. 1, 2011, pages 335-340, XP002680174, GBACADEMIC PRESS, LONDON. ISSN: 0023-6438
- SOUCI SIEGFRIED WALTER ET AL: "Food composition and nutrition tables ; Egg yolk", 1 January 2000 (2000-01-01), FOOD COMPOSITION AND NUTRITION TABLES = DIE ZUSAMMENSETZUNG DER LEBENSMITTEL, NÄHRWERT-TABELLEN = LA COMPOSITION DES ALIMENTS, TABLEAUX DES VALEURS NUTRITIVES, MEDPHARM SCIENTIFIC PUBLISHERS, STUTTGART, GERMANY, PAGE(S) 149 - 150, XP002662936, ISBN: 978-3-88763-076-8

## Description

### TECHNICAL FIELD OF THE INVENTION

The present invention relates to a heat-stable oil-in-water emulsion, more particularly to a heat-stable oil-in-water emulsion that contains non-modified egg yolk lecithin and water-insoluble cellulosic fibre.

### BACKGROUND OF THE INVENTION

Egg yolk is widely used as an emulsifying agent in the preparation of oil-in-water emulsions such as mayonnaise, dressings and sauces. However, emulsions stabilized by ordinary egg yolk will break up during heating, resulting in oil separation and surface burning. Furthermore, heat treatment induces an undesirable texture change in these emulsions by rendering them more 'jelly'. Consequently, non-modified egg yolk is generally not used in oil-in-water emulsions that have to be heat-sterilized or that are designed for use in hot applications.

GB 1 525 929 describes water-in-oil emulsions with improved heat-stability which contain an egg yolk that has been modified with phospholipase A. By treating egg yolk with phospholipase A, phosphatides contained therein are hydrolysed to lysophosphatides and fatty acids. Lysophosphatides such as lysophosphatidyl choline are effective oil-in-water emulsifiers capable of stabilising oil-in-water emulsions against heat-induced emulsion break-up.

US 5,314,706 describes a heat-stable oil-in-water emulsion that comprises 3-80 wt.% oil, water and acetic acid and 1-10 wt.% of an emulsification agent comprising a homogenate of egg yolk, of exogenous soybean lysophospholipid containing lysophosphatidylcholine, and of an egg yolk stabilizer substance selected from the group consisting of salt and sucrose.

US 5,773,072 describes a process for preparing a heat-stable oil and water emulsion sauce which comprises:
- homogenizing a mixture of unmodified egg yolk and of diacetyl tartaric acid ester of monoglyceride (DATEM) emulsifying agents to obtain a homogenized mixture;
- combining the homogenized mixture with ingredients comprising an edible oil, water, a thickener component and an ingredient selected from the group consisting of salt and sugar to obtain a further mixture comprising 5-70 wt.% oil, 0.1-20 wt.% unmodified egg yolk, and 0.5-1.5% DATEM by weight of dry matter;
- homogenizing the further mixture to obtain an emulsion which is heat-stable, and
- heating the emulsion at a temperature and for a time to at least pasteurize the emulsion to obtain a heat-treated emulsion product.

The aforementioned methods for preparing egg-yolk based heat-stable oil-in-water emulsions have the disadvantage that they require enzymatic modification of the lecithin component or the use of a synthetic emulsifier.

EP-A 0 295 865 describes oil-in-water emulsions comprising a sufficient amount of parenchymal cell cellulose to stabilize the emulsion. Example 4 describes mayonnaise formulations that have not been subjected to heat treatment and that contain:

| | |
|---|---|
| Egg yolk | 4.00-6.00 wt.% |
| Water | 12.00-52.00 wt.% |
| Acetic acid | 0.20 wt.% |
| Sugar | 1.55 wt.% |
| Salt | 0.25 wt.% |
| Oil | 40-80 wt.% |
| Parenchymal cell cellulose | 0.20-0.40 wt.% |

WO 2010/102920 describes a method for preparing an edible emulsion comprising oil, water and insoluble fibre. Example 1 describes a low fat mayonnaise containing 20 wt.% oil, 2.5 wt.% citrus fibre, 4.0 wt.% enzyme modified egg yolk (containing 10% NaCl), 2.4 wt.% vinegar (12%), 1.5 wt.% salt, 3.0 wt.% sugar, 0.01 wt.% EDTA, 0.1 wt.% K-sorbate and water. The preparation of this emulsion did not comprise any heat treatment.

US 2011/0020525 describes a method of minimizing phase separation in an emulsion, said method comprising:
- providing a dry blend system comprising citrus pulp fibre; and
- mixing said dry blend system with a liquid system to generate an emulsion, wherein the liquid system is selected from the group consisting of water, water miscible liquids, water immiscible liquids, and microemulsions; and wherein said emulsion is devoid of synthetic and natural emulsifiers. The examples describe a dressing containing 30 wt.% oil, 1.5 wt.% egg yolk powder, 1.5 wt.% citrus pulp fibre, 4.5 wt.% instant starch, sugar, salt, mustard, potassium sorbate and water. The preparation of this dressing did not comprise any heat treatment.

Non-prepublished patent application WO 2012/046072 A1 discloses a method for making an edible emulsion containing egg yolk and cellulosic fibre from citrus fruit. No mentioning is made of heating the emulsion and heat stability of the emulsion upon sterilization and pasteurization.

US 4,774,099 discloses baked goods containing a shortening, eggs and orange fibre as ingredients. A foodstuff wherein an emulsion is brought into contact with other ingredients (and not mixed) and then heated is not disclosed though. Moreover, an emulsion as such that is heated is not disclosed either.

WO 2005/039316 A1 discloses a salad dressing comprising egg yolk, citrus fibre and water-soluble polysaccharide thickener, pectin. The emulsion is pasteurized for 2 minutes at a temperature between 88 and 90°C. There is no disclosure of the preparation of a composite foodstuff containing a heat-stable emulsion and heating the food stuff. Moreover, there is no mentioning of sterilization of an emulsion.

### SUMMARY OF THE INVENTION

The present invention enables the preparation of heat-stable oil-in-water emulsions without the use of enzyme modified egg yolk lecithin or synthetic emulsifiers. The inventors have unexpectedly discovered that the limited heat-stability provided by egg yolk can be improved dramatically by the introduction of water-insoluble cellulosic fibre. Thus, the combined use of egg yolk and water-insoluble cellulosic fibre enables the preparation of oil-in-water emulsions that can suitably be heated in an oven at a temperature of 180°C or more for several minutes without breaking up and/or without developing undesirable textural changes.

Accordingly, one aspect of the invention relates to a process of preparing a food product comprising 1-100 wt.% of a heat-stable oil-in-water emulsion, said process comprising heating the food product to a temperature in excess of 90°C for at least 5 minutes, wherein the heat-stable emulsion contains:
- 3-85 wt.% oil;
- 12-92 wt.% water;
- 0.1-1.0 wt.% egg yolk lecithin, said egg yolk lecithin having a weight ratio phosphatidyl choline (PC) to lysophosphatidyl choline (LPC) of more than 2:1;
- 0.1-5.0 wt.% water-insoluble cellulosic fibre; and
- 0-20 wt.% of one or more other edible ingredients.

A weight ratio PC/LPC of more than 2:1 is indicative of the fact that the egg yolk lecithin is substantially non-hydrolyzed. Heat-stabilized egg yolk typically has a PC/LPC ratio of less than 1:10, whereas non-modified egg yolk usually has a PC/LPC ratio of about 6:1.

The heat-stability of the present oil-in-water emulsion further enables the production of the emulsions in sterilized or pasteurized form. Consequently, a further aspect of the invention relates to a sterilized or pasteurized oil-in-water emulsion comprising:
- 3-85 wt.% oil;
- 12-92 wt.% water;
- 0.1-1 wt.% egg yolk lecithin, said egg yolk lecithin having a weight ratio phosphatidyl choline (PC) to lysophosphatidyl choline (LPC) of more than 2:1;
- 0.1-5.0 wt.% water-insoluble cellulosic fibre;
- 0-20 wt.% of one or more other edible ingredients;
wherein the heat-stable emulsion contains no water-soluble polysaccharide thickener, and wherein the emulsion has been heated to a temperature in excess of 90°C for at least 5 minutes.

### DETAILED DESCRIPTION OF THE INVENTION

One aspect of the present invention relates to a process of preparing a food product comprising 1-100 wt.% of a heat-stable oil-in-water emulsion, said process comprising heating the food product to a temperature in excess of 90°C for at least 5 minutes, wherein the heat-stable emulsion contains:
- 3-85 wt.%, preferably 20-65 wt.% oil;
- 12-92 wt.%, preferably 25-75 wt.% water;
- 0.1-1.0 wt.% egg yolk lecithin, said egg yolk lecithin having a weight ratio phosphatidyl choline (PC) to lysophosphatidyl choline (LPC) of more than 2:1;
- 0.1-5.0 wt.% water-insoluble cellulosic fibre; and
- 0-20 wt.% of one or more other edible ingredients.

The present process encompasses, for instance, the preparation of a composite foodstuff in which the heat-stable oil-in-water emulsion is combined with a food substrate and wherein the composite foodstuff so obtained is subsequently heated, e.g. under a grill or in an oven. The process also encompasses the preparation of a heat sterilized or heat pasteurized emulsion by subjecting a heat-stable oil-in-water emulsion to heat sterilization or heat pasteurization.

The term "oil" as used herein refers to lipids selected from triglycerides, diglycerides, monoglycerides and combinations thereof. The oil may be solid or liquid at ambient temperature.

The term "lecithin" as used herein refers to phospholipids selected from the group of phosphatidyl choline, phosphatidyl ethanolamine, lysophosphatidyl choline, lysophosphatidyl ethanolamine, sphingomyelin and combinations thereof.

Cellulose is found in plants as microfibrils, which typically have a diameter of 2-20 nm and a length of 100-40,000 nm. These microfibrils form the structurally strong framework in the cell walls of plant materials. Cellulose is a linear polymer of -(1→4)-D-glucopyranose units. Cellulose molecules typically consist of 2,000-14,000 of such units and are completely insoluble in normal aqueous solutions. When dispersed in an aqueous solution insoluble cellulosic fibres typically bind considerable amounts of water. Cellulosic fibres may contain other fibrous components such as hemicelluloses, pectins and lignin.

Purified cellulose is used as a starting material for the manufacture of a number of water-soluble hydrocolloids, such as carboxymethyl cellulose (CMC). The manufacture of these cellulose derivatives involves chemical modification of the natural cellulose material. CMC, for instance, is synthesized by the alkali-catalyzed reaction of cellulose with chloroacetic acid. The polar (organic acid) carboxyl groups render the cellulose soluble and chemically reactive.

Typically, the water-insoluble cellulosic fibres of the present invention are substantially or completely underivatised. According to a particularly preferred embodiment of the invention the water-insoluble cellulosic fibres are natural cellulosic fibres which have not been chemically modified.

Unlike, for instance, microcrystalline cellulose, the cellulose molecules within the present water-insoluble cellulosic fibres are essentially non-hydrolysed. Typically, the cellulose molecules contained within the water-insoluble cellulosic fibres employed in accordance with the present invention contain at least 1,000, preferably at least 2,000 β-(I→4)-D-glucopyranose units.

It was found that water-insoluble cellulosic fibres originating from fruit yield particularly satisfactory results. According to a particularly preferred embodiment the water-insoluble cellulosic fibres employed originate from citrus fruit, tomatoes, peaches, pears, apples, plums or combinations thereof. Even more preferably, the insoluble cellulosic fibres are water-insoluble citrus fibres. Most preferably, the water-insoluble citrus fibres originate from the albedo and/or the flavedo of citrus fruits.

The water-insoluble cellulosic fibres employed in the oil-in-water emulsion of the present invention typically have a length of 1-200 μm. Preferably, the cellulosic fibres have an average length of 5-100 μm, most preferably of 10-80 μm.

The water-insoluble cellulosic fibre is preferably contained in the heat-stable oil-in-water emulsion in a concentration of 0.2-12%, more preferably of 0.5-10% and most preferably of 0.8-8% by weight of water. Expressed differently, the heat-stable emulsion preferably contains 0.4-4.5%, most preferably 0.6-4.0% of the water-insoluble cellulosic fibre by weight of the total emulsion.

In the present process the food product comprising the heat-stable oil-in-water emulsion is typically heated by introducing it into an oven or a grill which is kept at a temperature of at least 150°C, more preferably of 180-300°C. Typically, the food product comprising the emulsion is heated under these conditions for at least 5 minutes, more preferably of at least 8 minutes and most preferably 10-50 minutes.

Examples of oil-in-water emulsions encompassed by the present invention include mayonnaise, dressings and sauces. Preferably, the oil-in-water emulsion is a mayonnaise or a sauce, most preferably a mayonnaise.

According to another preferred embodiment, the heat-stable emulsion has a pH of 3.0-4.5, most preferably a pH of 3.3-3.7. Even more preferably, the emulsion has been acidified with a food grade acid. Most preferably, the emulsion contains 0.05-1.0 wt.% of a food acid selected from acetic acid, citric acid, lactic acid, phosphoric acid and combinations thereof.

Egg yolk is a good source of phospholipids. Typically, phospholipids represent approximately 10% of the wet weight of egg yolk, which is equivalent to about 27% of the total egg yolk lipids. The main components of egg-yolk lecithin are phosphatidylcholine (PC, 80%) and phosphatidylethanolamine (PE, 12%). Egg-yolk lecithin also contains lysophosphatidylcholine (LPC), sphingomyelin (SM), and neutral lipids in minor quantities.

The present oil-in-water emulsion preferably contains 0.15-0.9 wt.%, more preferably 0.2-0.85 wt.% and most preferably 0.25-0.8 wt.% of egg yolk lecithin.

As explained herein before, the present invention offers the advantage that it achieves heat-stability without enzymatic modification of the egg yolk contained therein. Accordingly, the heat-stable emulsion advantageously contains 0.2-5 wt.%, more preferably 0.4-4.5wt,% and most preferably 0.5-4 wt.% of non-modified egg yolk solids.

The weight ratio PC/LPC of the egg yolk lecithin comprised in the heat-stable emulsion preferably exceeds 3:1, most preferably it exceeds 4:1.

The dispersed oil phase of the present oil-in-water emulsion typically has a volume weighted geometric mean diameter (D_{3,3}) in the range of 0.3-15 μm, most preferably of 0.5-10 μm. This mean diameter may suitably be determined using the method described by Goudappel et al. (Measurement of Oil Droplet Size Distributions in Food Oil/Water Emulsions by Time Domain Pulsed Field Gradient NMR, Journal of Colloid and Interface Science 239, 535-542 (2001)). This article describes a method for measuring oil droplet size distributions by means of a benchtop pulsed field gradient NMR spectrometer operating in the time domain. The continuous water phase is successfully suppressed by gradient pulses in order to measure the dispersed oil phase. The article also explains how the mean diameter D_{3,3} of the dispersed oil phase of an oil-in-water emulsion may be determined.

The present invention offers the advantage that it enables the manufacture of a heat-stable emulsion without the use of water-soluble polysaccharide thickeners. Consequently, in a particularly preferred embodiment the present emulsion contains no water-soluble polysaccharide thickener.

In accordance with one advantageous embodiment of the present process the food product is a composite foodstuff comprising a food substrate and the heat-stable oil-in-water emulsion in a weight ratio of 80:20 to 99:1. The food substrate may be selected from, for example, meat, fish, shellfish, shrimps, pies, vegetables and combinations thereof.

The composite foodstuff is suitably prepared by applying the oil-in-water emulsion onto the food substrate before the heating, e.g. by pouring the emulsion over the food substrate or by spreading it onto said substrate. Hence for the purpose of the present invention the composite foodstuff comprises a heat-stable emulsion which still is in the form of an emulsion. The emulsion suitably is not mixed with the food substrate, preferably it is only brought into contact with the food substrate.

The composite food product is preferably heated by grilling or by heating in an oven or a microwave. Most preferably, the composite food product is heated by grilling or in an oven.

In accordance with another advantageous embodiment, the food product is heated to sterilize or pasteurize the emulsion. Most preferably, the food product is pasteurized or sterilized by heating the food product to a temperature of at least 95°C, most preferably of at least 100°C.

According to a particularly preferred embodiment, the food product is selected from a mayonnaise, a sauce, a salad, a dressing and a whole meal. Hence for the purpose of the present invention preferably the food product is a mayonnaise or dressing or a sauce which is heated as such. This distinguishes from the composite food stuff in that the emulsion is not brought into contact with a food substrate before the heating. Most preferably, the food product is a mayonnaise.

Preferably, the mayonnaise comprises 10-85 wt.% oil, 0.2-5 wt.% egg yolk solids and at least 5 wt.% of an acidifier selected from vinegar, lemon juice and a combination thereof. The mayonnaise may suitably contain further ingredients, such as herbs, spices and mustard.

Hence preferably the present invention relates to a process of preparing a food product, said food product being a composite foodstuff comprising a food substrate and the heat-stable oil-in-water emulsion in a weight ratio of 80:20 to 99:1 or a foodstuff selected from the group consisting of a mayonnaise, a dressing and a sauce, said process comprising heating the food product to a temperature in excess of 90°C for at least 5 minutes, wherein the heat-stable emulsion contains:
- 3-85 wt.% oil;
- 12-92 wt.% water;
- 0.1-1.0 wt.% egg yolk lecithin, said egg yolk lecithin having a weight ratio phosphatidyl choline (PC) to lysophosphatidyl choline (LPC) of more than 2:1;
- 0.1-5.0 wt.% water-insoluble cellulosic fibre; and
- 0-20 wt.% of one or more other edible ingredients.

Another aspect of the invention relates to the use of a heat-stable oil-in-water emulsion as defined herein before for preparing a composite foodstuff, said use comprising heating a combination of a food substrate and the heat-stable emulsion to a temperature in excess of 100°C for at least 5 minutes.

Yet another aspect of the present invention relates to a sterilized or pasteurized oil-in-water emulsion, said oil-in-water emulsion having a pH of 3.0-4.5 and comprising:
- 3-85 wt.%, preferably 20-65 wt.% oil;
- 12-92 wt.% , preferably 25-75 wt.% water;
- 0.1-1 wt.% egg yolk lecithin, said egg yolk lecithin having a weight ratio PC/LPC of more than 2:1;
- 0.1-5.0 wt.% water-insoluble cellulosic fibre;
- 0-20 wt.% of one or more other edible ingredients;
wherein the emulsion contains no water-soluble polysaccharide thickener, and wherein the emulsion has been heated to a temperature in excess of 90°C for at least 5 minutes. Preferably, the food product is pasteurized or sterilized by heating the food product to a temperature of at least 95°C, most preferably of at least 100°C. Preferably the heating at these temperatures is done during a period of at least 5 minutes.

According to a particularly preferred embodiment the sterilized or pasteurized oil-in-water emulsion is a pasteurized or sterilized heat-stable oil-in-water emulsion as defined herein before. Most preferably, the emulsion is a pasteurised emulsion.

Preferably, the sterilized or pasteurized oil-in-water emulsion is selected from the group of a mayonnaise, a dressing and a sauce. Most preferably, the emulsion is a mayonnaise. According to an especially preferred embodiment, the mayonnaise is packaged in a container that carries information indicating that the emulsion can be used in hot applications, notably hot applications that involve heating of the emulsion to a temperature in excess of 90°C.

The invention is further illustrated by the following non-limiting examples.

### EXAMPLES

### Example 1

Mayonnaises were produced on the basis of the recipes shown in Table 1.

**Table 1**

| | **A** | **1** | **B** |
|---|---|---|---|
| Oil | 34 | 34 | 34 |
| Water and vinegar | 49.9 | 52.2 | 55.4 |
| Lemon juice | 0.04 | 0.04 | 0.04 |
| Sucrose | 3 | 3 | 3 |
| Salt | 1.22 | 1.22 | 1.22 |
| Maize starch | 4.5 | | |
| EDTA | 0.0075 | 0.0075 | 0.0075 |
| Sorbic acid | 0.12 | 0.12 | 0.12 |
| Egg yolk¹ | 7.2 | 7.2 | |
| Enzyme modified egg yolk ² | | | 4 |
| Citrus fibre ³ | | 2.2 | 2.2 |

| | | | |
|---|---|---|---|
| ¹ Liquid egg yolk, from Bouwhuis Enthoven, the Netherlands (PC/LPC ratio of 6:1) ² Stabilised egg yolk (enzyme modified), from Bouwhuis Enthoven, the Netherlands (PC/LPC ratio of 1:10) ³ Citrus Fibre AQ Plus Type N, from Herbafood | | | |

Mayonnaise A was prepared using the following procedure:
- All ingredients except for the egg yolk and oil were dispersed in water and heated to 85°C for 5 minutes and then cooled to 20°C. The emulsion was prepared by mixing the water phase with the egg yolk and oil phases to produce a pre-emulsion which was then emulsified through a colloid mill with enough shear to produce a mayonnaise texture. The final mayonnaise was then collected into glass jars and stored at ambient temperature.

Mayonnaises 1 and B were prepared using the following procedure:
- The citrus fibre was dispersed in water followed by the other dry ingredients to produce the water phase. The emulsion was produced by mixing the water phase with the egg yolk and oil phases and then homogenising the pre-emulsion through a high pressure homogeniser at a pressure of about 500bar. The final mayonnaise was then collected into glass jars and stored at ambient temperature.

### Example 2

The heat stability of the mayonnaises described in Example 1 was assessed by subjecting the products to the following test procedure:
- Mayonnaise samples in closed, glass jars were put in a vessel with boiling water, the water level being sufficiently high to fully cover the jar up to the metal lid;
- The samples are kept in the boiling water for 1 hour;
- After 1 hour, the vessel is flushed with cold tap water to allow the samples to be cooled to ambient temperature;
- The products were spread on a surface for visual evaluation. Free liquid was identified as oil or water by means of Wator indicator paper.
- Oil droplet size was measured before and after the heat treatment by NMR spectroscopy.
- Samples were analysed by means of Confocal Scanning Laser Microscopy (CSLM) before and after the heat treatment.

The spreading test showed that heat treated mayonnaise A suffered from oil separation. Furthermore, the rheology of mayonnaise A had changed as a result of the heat treatment in that it had become more 'jelly' and in that it tended to fracture upon compression.

The results of the oil droplet size measurements are shown in Table 2 (D_{3,3} is the volume weighted average oil droplet size).

**Table 2**

| Mayonnaise | D_{3,3} (μm) before heat treatment | D_{3,3} (μm) after heat treatment |
|---|---|---|
| A | 2.3 | 6.9 |
| 1 | 1.2 | 3.3 |
| B | 1.4 | 1.3 |

CSLM showed that the heat treatment had caused substantial oil droplet aggregation in mayonnaise A. The CSLM images of mayonnaises 1 and B after heat treatment were very similar to those of the same mayonnaises before the heat treatment.

### Example 3

The heat stability of the mayonnaises described in Example 1 was assessed by subjecting them to the following grilling test.
- A layer of mayonnaise having a thickness of 1 cm was evenly spread out on a small shallow dish
- The mayonnaise layer was grilled for 8 minutes in a pre-heated oven (200°C)
- The grilled products were left to cool down for 4 minutes before being evaluated
- Oil droplet size was measured before and after the heat treatment by NMR.

After the grilling mayonnaise A showed signs of oil exudation. Furthermore, mayonnaise A was found to have developed a pudding-like texture. Mayonnaises 1 and B did not show any signs of oil exudation and the texture after grilling was similar to the texture of the same product before grilling.

The results of the oil droplet size measurements are shown in Table 3 (D_{3,3} is the volume weighted average oil droplet size)

**Table 3**

| Mayonnaise | D_{3,3} (μm) before grilling | D_{3,3} (μm) after grilling |
|---|---|---|
| A | 2.3 | >20 |
| 1 | 1.2 | 3.0 |
| B | 1.4 | 1.7 |

### Example 4

The mayonnaises described in Example 1 were sterilized by heating them to 121 °C for 15 minutes. Oil droplet size was measured before and after sterilization. The results are shown in Table 4.

**Table 4**

| Mayonnaise | | D_{3,3} (μm) before sterilization | D_{3,3} (µm) after sterilization |
|---|---|---|---|
| A | Mayonnaise A | 2.3 | 9.2 |
| 1 | Mayonnaise 1 | 1.2 | 4.0 |
| B | Mayonnaise B | 1.4 | 1.3 |

## Claims

1. A process of preparing a food product comprising 1-100 wt.% of a heat-stable oil-in-water emulsion, said process comprising heating the food product to a temperature in excess of 90°C for at least 5 minutes, wherein the heat-stable emulsion contains:
• 3-85 wt.% oil;
• 12-92 wt.% water;
• 0.1-1.0 wt.% egg yolk lecithin, said egg yolk lecithin having a weight ratio phosphatidyl choline (PC) to lysophosphatidyl choline (LPC) of more than 2:1;
• 0.1-5.0 wt.% water-insoluble cellulosic fibre; and
• 0-20 wt.% of one or more other edible ingredients.

2. Process according to claim 1, wherein the heat-stable emulsion has a pH of 3.0-4.5.

3. Process according to claim 1 or 2, wherein the heat-stable emulsion contains 0.2-5.0 wt.% of non-modified egg yolk solids.

4. Process according to any one of the preceding claims, wherein the water-insoluble cellulosic fibre originates from fruit.

5. Process according to any one of the preceding claims, wherein the heat-stable emulsion contains no water-soluble polysaccharide thickener.

6. Process according to any one of the preceding claims, wherein the food product is a composite foodstuff comprising a food substrate and the heat-stable oil-in-water emulsion in a weight ratio of 80:20 to 99:1.

7. Process according to claim 6, wherein the food substrate is selected from meat, fish, shellfish, shrimps, pies, vegetables and combinations thereof.

8. Process according to claim 6 or 7, wherein the oil-in-water emulsion is applied onto the food substrate before the heating.

9. Process according to any one of claims 6-8, wherein the combination of food substrate and heat-stable emulsion is heated by grilling or is heated in an oven or a microwave.

10. Process according to any one of claims 1-5, wherein the food product is sterilized by heating the food product to a temperature of at least 95°C.

11. Process according to claim 10, wherein the food product is selected from a mayonnaise, a dressing, a sauce, a salad and a whole meal.

12. Process according to any one of the preceding claims, wherein the emulsion is a mayonnaise, a dressing, or a sauce.

13. Use of a heat-stable oil-in-water emulsion for preparing a composite foodstuff, said use comprising heating a combination of a food substrate and a heat-stable emulsion to a temperature in excess of 100°C for at least 5 minutes, said heat-stable emulsion containing:
• 3-85 wt.% oil;
• 12-92 wt.% water;
• 0.1-1.0 wt.% egg yolk lecithin, said egg yolk lecithin having a weight ratio PC/LPC of more than 2:1;
• 0.1-5.0 wt.% water-insoluble cellulosic fibre; and
• 0-20 wt.% of one or more other edible ingredients.

14. A sterilized or pasteurized oil-in-water emulsion, said oil-in-water emulsion having a pH of 3.0-4.5 and comprising:
• 3-85 wt.% oil;
• 12-92 wt.% water;
• 0.1-1 wt.% egg yolk lecithin, said egg yolk lecithin having a weight ratio PC/LPC of more than 2:1;
• 0.1 -5.0 wt.% water-insoluble cellulosic fibre;
• 0-20 wt.% of one or more other edible ingredients;
wherein the emulsion contains no water-soluble polysaccharide thickener, and wherein the emulsion has been heated to a temperature in excess of 90°C for at least 5 minutes.

15. Emulsion according to claim 14, wherein the emulsion is a sterilized or pasteurized heat-stable emulsion as defined in any one of claims 1 to 5.

16. Emulsion according to claim 14 or 15, wherein the emulsion is a mayonnaise.

## Patentansprüche

1. Verfahren zur Herstellung eines Nahrungsmittelprodukts, umfassend 1-100 Gew.-% einer hitzestabilen Öl-in-Wasser-Emulsion, wobei das Verfahren das Erhitzen des Nahrungsmittelprodukts auf eine Temperatur von über 90°C für mindestens 5 Minuten umfasst, wobei die hitzestabile Emulsion enthält:
• 3-85 Gew.-% Öl,
• 12-92 Gew.-% Wasser,
• 0,1-1,0 Gew.-% Eigelb-Lecithin, wobei das Eigelb-Lecithin ein Gewichtsverhältnis von Phosphatidylcholin (PC) zu Lysophosphatidylcholin (LPC) von mehr als 2:1 aufweist,
• 0,1-5,0 Gew.-% wasserunlösliche Cellulosefaser und
• 0-20 Gew.-% eines oder mehrerer anderer essbarer Inhaltsstoffe.

2. Verfahren nach Anspruch 1, wobei die hitzestabile Emulsion einen pH von 3,0-4,5 aufweist.

3. Verfahren nach Anspruch 1 oder 2, wobei die hitzestabile Emulsion 0,2-5,0 Gew.-% an nicht-modifizierten Eigelb-Feststoffen enthält.

4. Verfahren nach irgendeinem der vorhergehenden Ansprüche, wobei die wasserunlösliche Cellulosefaser von Früchten stammt.

5. Verfahren nach irgendeinem der vorhergehenden Ansprüche, wobei die hitzestabile Emulsion keine wasserlöslichen Polysaccharid-Verdickungsmittel enthält.

6. Verfahren nach irgendeinem der vorhergehenden Ansprüche, wobei das Nahrungsmittelprodukt ein Verbundnahrungsmittel ist, das ein Nahrungsmittelsubstrat und die hitzestabile Öl-in-Wasser-Emulsion in einem Gewichtsverhältnis von 80:20 bis 99:1 umfasst.

7. Verfahren nach Anspruch 6, wobei das Nahrungsmittelsubstrat unter Fleisch, Fisch, Krustentieren, Garnelen, Kuchen, Gemüse und Kombinationen davon ausgewählt wird.

8. Verfahren nach Anspruch 6 oder 7, wobei die Öl-in-Wasser-Emulsion vor dem Erhitzen auf das Nahrungsmittelsubstrat aufgetragen wird.

9. Verfahren nach irgendeinem der Ansprüche 6-8, wobei die Kombination des Nahrungsmittelsubstrats und der hitzestabilen Emulsion durch Grillen erhitzt oder in einem Ofen oder in einem Mikrowellenherd erhitzt wird.

10. Verfahren nach irgendeinem der Ansprüche 1-5, wobei das Nahrungsmittelprodukt durch Erhitzen des Nahrungsmittelprodukts auf eine Temperatur von mindestens 95°C sterilisiert wird.

11. Verfahren nach Anspruch 10, wobei das Nahrungsmittelprodukt unter einer Mayonnaise, einem Dressing, einer Soße, einem Salat und einer ganzen Mahlzeit ausgewählt wird.

12. Verfahren nach irgendeinem der vorhergehenden Ansprüche, wobei die Emulsion eine Mayonnaise, ein Dressing oder eine Soße ist.

13. Verwendung einer hitzestabilen Öl-in-Wasser-Emulsion zur Herstellung eines Verbundnahrungsmittels, wobei diese Verwendung das Erhitzen einer Kombination eines Nahrungsmittelsubstrats und einer hitzestabilen Emulsion auf eine Temperatur von mehr als 100°C für mindestens 5 Minuten umfasst, wobei die hitzestabile Emulsion enthält:
• 3-85 Gew.-% Öl,
• 12-92 Gew.-% Wasser,
• 0,1-1,0 Gew.-% Eigelb-Lecithin, wobei das Eigelb-Lecithin ein Gewichtsverhältnis PC/LPC von mehr als 2:1 aufweist,
• 0,1-5,0 Gew.-% wasserunlösliche Cellulosefaser und
• 0-20 Gew.-% einer oder mehrerer anderer essbarer Zutaten.

14. Sterilisierte oder pasteurisierte Öl-in-Wasser-Emulsion, wobei die ÖI-in-Wasser-Emulsion einen pH von 3,0-4,5 aufweist und umfasst:
• 3-85 Gew.-% Öl,
• 12-92 Gew.-% Wasser,
• 0,1-1 Gew.-% Eigelb-Lecithin, wobei das Eigelb-Lecithin ein Gewichtsverhältnis PC/LPC von mehr als 2:1 aufweist,
• 0,1-5,0 Gew.-% wasserunlösliche Cellulosefaser,
• 0-20 Gew.-% einer oder mehrerer anderer essbarer Zutaten,
wobei die Emulsion kein wasserlösliches Polysaccharid-Verdickungsmittel enthält und wobei die Emulsion auf eine Temperatur von mehr als 90°C für mindestens 5 Minuten erhitzt worden ist.

15. Emulsion nach Anspruch 14, wobei die Emulsion eine sterilisierte oder pasteurisierte hitzestabile Emulsion, wie in irgendeinem der Ansprüche 1 bis 5 definiert, darstellt.

16. Emulsion nach Anspruch 14 oder 15, wobei die Emulsion eine Mayonnaise ist.

## Revendications

1. Procédé de préparation d'un produit alimentaire comprenant 1-100 % en masse d'une émulsion huile-dans-eau stable à la chaleur, ledit procédé comprenant le chauffage du produit alimentaire à une température excédant 90°C pendant au moins 5 minutes, dans lequel l'émulsion stable à la chaleur contient :
▪ 3-85 % en masse d'huile ;
▪ 12-92 % en masse d'eau ;
▪ 0,1-1,0 % en masse de lécithine de jaune d'oeuf, ladite lécithine de jaune d'oeuf ayant un rapport massique phosphatidylcholine (PC) à lysophosphatidylcholine (LPC) supérieur à 2:1 ;
▪ 0,1-5,0 % en masse de fibre cellulosique insoluble dans l'eau ; et
▪ 0-20 % en masse d'un ou plusieurs autres ingrédients comestibles.

2. Procédé selon la revendication 1, dans lequel l'émulsion stable à la chaleur présente un pH de 3,0-4,5.

3. Procédé selon la revendication 1 ou 2, dans lequel l'émulsion stable à la chaleur contient 0,2-5,0 % en masse de matières solides de jaune d'oeuf non-modifié.

4. Procédé selon l'une quelconque des revendications précédentes, dans lequel la fibre cellulosique insoluble dans l'eau provient d'un fruit.

5. Procédé selon l'une quelconque des revendications précédentes, dans lequel l'émulsion stable à la chaleur ne contient aucun épaississant de polysaccharide soluble dans l'eau.

6. Procédé selon l'une quelconque des revendications précédentes, dans lequel le produit alimentaire est un aliment composite comprenant un substrat alimentaire et une émulsion huile-dans-eau stable à la chaleur dans un rapport massique de 80:20 à 99:1.

7. Procédé selon la revendication 6, dans lequel le substrat alimentaire est choisi parmi la viande, le poisson, les crustacés, les crevettes, les tartes, les légumes et des combinaisons de ceux-ci.

8. Procédé selon la revendication 6 ou 7, dans lequel l'émulsion huile-dans-eau est appliquée sur le substrat alimentaire avant le chauffage.

9. Procédé selon l'une quelconque des revendications 6-8, dans lequel la combinaison de substrat alimentaire et d'émulsion stable à la chaleur est chauffée au grill ou est chauffé dans un four ou un four à micro-ondes.

10. Procédé selon l'une quelconque des revendications 1-5, dans lequel le produit alimentaire est stérilisé par chauffage du produit alimentaire à une température d'au moins 95°C.

11. Procédé selon la revendication 10, dans lequel le produit alimentaire est choisi parmi une mayonnaise, un assaisonnement, une sauce, une salade et un repas complet.

12. Procédé selon l'une quelconque des revendications précédentes, dans lequel l'émulsion est une mayonnaise, un assaisonnement, ou une sauce.

13. Utilisation d'une émulsion huile-dans-eau stable à la chaleur pour la préparation d'un aliment composite, ladite utilisation comprenant le chauffage d'une combinaison d'un substrat alimentaire et d'une émulsion stable à la chaleur à une température excédant 100°C pendant au moins 5 minutes, ladite émulsion stable à la chaleur contenant :
▪ 3-85 % en masse d'huile ;
▪ 12-92 % en masse d'eau ;
▪ 0,1-1,0 % en masse de lécithine de jaune d'oeuf, ladite lécithine de jaune d'oeuf ayant un rapport massique PC/LPC supérieur à 2:1 ;
▪ 0,1-5,0 % en masse de fibre cellulosique insoluble dans l'eau ; et
▪ 0-20 % en masse d'un ou plusieurs autres ingrédients comestibles.

14. Emulsion huile-dans-eau stérilisée ou pasteurisée, ladite émulsion huile-dans-eau ayant un pH de 3,0-4,5 et comprenant :
▪ 3-85 % en masse d'huile ;
▪ 12-92 % en masse d'eau ;
▪ 0,1-1,0 % en masse de lécithine de jaune d'oeuf, ladite lécithine de jaune d'oeuf ayant un rapport massique PC/LPC supérieur à 2:1 ;
▪ 0,1-5,0 % en masse de fibre cellulosique insoluble dans l'eau ; et
▪ 0-20 % en masse d'un ou plusieurs autres ingrédients comestibles ;
dans laquelle l'émulsion ne contient pas d'épaississant de polysaccharide soluble dans l'eau, et dans laquelle l'émulsion a été chauffée à une température excédant 90°C pendant au moins 5 minutes.

15. Emulsion selon la revendication 14, dans laquelle l'émulsion est une émulsion stable à la chaleur, stérilisée ou pasteurisée selon l'une quelconque des revendications 1 à 5.

16. Emulsion selon la revendication 14 ou 15, dans laquelle l'émulsion est une mayonnaise.
